# EUROPEAN PATENT SPECIFICATION

(11) **EP 3 186 518 B1**
(45) Date of publication and mention of the grant of the patent: **01.05.2019**
(21) Application number: 15766960.7
(22) Date of filing: 28.08.2015
(51) Int. Cl.: F04F 13/00

(54) **SYSTEMS AND METHOD FOR PUMP PROTECTION WITH A HYDRAULIC ENERGY TRANSFER SYSTEM**
SYSTEME UND VERFAHREN ZUM SCHUTZ VON PUMPEN MIT EINEM HYDRAULISCHEN ENERGIEÜBERTRAGUNGSSYSTEM
SYSTÈMES ET PROCÉDÉ DE PROTECTION DE POMPE COMPRENANT UN SYSTÈME DE TRANSFERT D'ÉNERGIE HYDRAULIQUE

(30) Priority: 29.08.2014 US 201462044095 P
(43) Date of publication of application: 05.07.2017
(73) Proprietor: Energy Recovery, Inc., San Leandro, California 94577 (US)
(72) Inventor: GAINS-GERMAIN, Andrea Mary, San Leandro, California 94577 (US); MARTIN, Jeremy Grant, San Leandro, California 94577 (US); GHASRIPOOR, Farshad, San Leandro, California 94577 (US)
(74) Representative: Knöner, Gregor
(86) International application number: PCT/US2015/047504
(87) International publication number: WO 2016/033508

(56) References cited:
- EP-A1- 2 065 597
- WO-A1-2014/074944
- GB-A- 803 026
- US-A1- 2006 032 620
- US-A1- 2007 137 170

## Description

### BACKGROUND

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

The subject matter disclosed herein relates to rotating equipment, and, more particularly, to systems and methods for handling corrosive fluids with rotating fluid handling equipment.

Pumps, or other fluid displacement systems, may be utilized in a variety of industrial systems to handle or transfer corrosive fluids. In some situations, exposure to corrosive fluids may cause a variety of maintenance issues for the pumps, such as erosion of material, pitting, chipping, spalling, delamination, and so forth. Accordingly, some pumps may be equipped with corrosion resistant materials to help reduce the effects of the corrosive fluids. However, modifications to pump designs and the use of special corrosion resistant materials may increase the overall manufacturing and production costs of the pumps. Furthermore, despite modifications to pump designs and the use of corrosion resistant materials, pumps exposed to corrosive fluids may still have a shorter lifespan and may be expensive to replace, either fully or by components. Accordingly, it may be beneficial to provide systems and methods that protect pumps from corrosive fluids within various industrial systems.

The document WO 2014/074944 A1 describes a control system for an amine gas processing system. By means of an isobaric pressure exchanger, a lean amine stream is transferred from a regenerator to a contactor and a rich amine stream is transferred from the contactor to the regenerator, the pressure exchanger providing a pressure exchange between both streams.

The document US 2007/0137170 A1 describes a speed-regulated pressure exchanger comprising a rotor having an external surface with a contour onto which a partial stream is directed to drive the rotor.

The document EP 2 065 597 A1 describes a split-chamber pressure exchanger in which the pressure exchanger chambers and the pistons are split in two so that the fluids between which a pressure exchange occurs cannot be mixed.

### SUMMARY

The invention is defined in the independent claims. The dependent claims describe embodiments of the invention.

### BRIEF DESCRIPTION OF THE DRAWINGS

Various features, aspects, and advantages of the present invention will become better understood when the following detailed description is read with reference to the accompanying figures in which like characters represent like parts throughout the figures, wherein:
FIG. 1 is a schematic diagram of an embodiment of an industrial system with a hydraulic energy transfer system configured to protect a high pressure pump from a corrosive fluid;
FIG. 2 is an exploded perspective view of an embodiment of the hydraulic energy transfer system of FIG. 1, illustrating a rotary isobaric pressure exchanger (IPX);
FIG. 3 is an exploded perspective view of an embodiment of a rotary IPX in a first operating position;
FIG. 4 is an exploded perspective view of an embodiment of a rotary IPX in a second operating position;
FIG. 5 is an exploded perspective view of an embodiment of a rotary IPX in a third operating position;
FIG. 6 is an exploded perspective view of an embodiment of a rotary IPX in a fourth operating position;
FIG. 7 is a schematic diagram of an embodiment of an industrial system with the hydraulic energy transfer system of FIG. 1, where the industrial system mixes a motive fluid with a corrosive fluid;
FIG. 8 is a schematic diagram of an embodiment of an industrial system with the hydraulic energy transfer system of FIG. 1, where the industrial system includes a motive fluid provided from a pressure letdown source; and
FIG. 9 is a schematic diagram of an embodiment of an industrial system with the hydraulic energy transfer system of FIG. 1, where the industrial system includes a high pressure vessel.

### DETAILED DESCRIPTION OF SPECIFIC EMBODIMENTS

One or more specific embodiments of the present invention will be described below. These described embodiments are only exemplary of the present invention. Additionally, in an effort to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As noted above, pumps may be utilized in a variety of industrial systems to handle or transfer corrosive fluids. For example, various pumps may be utilized within industrial systems or processes to handle corrosive fluids, such as, for example, ammonium carbamate, urea, nitric acid, sulfuric acid, ammonium phosphate, calcium phosphate, sodium phosphate, phosphoric acid, hydrofluoric acid, or any other corrosive fluid that may be abrasive (e.g., particle-laden fluids, such as frac fluids), sheer sensitive, viscous, or otherwise challenging to pump. Furthermore, the pumps may be high pressure pumps configured to pump the corrosive fluids to a higher pressure for various systems within the industrial system. In some situations, exposing pumps to corrosive fluids may cause a variety of maintenance issues for the pumps, such as erosion of material, pitting, chipping, spalling, delamination, and so forth. Accordingly, it may be beneficial to provide systems and methods that protect pumps from corrosive fluids within various industrial systems.

As discussed in detail below, the embodiments disclosed herein generally relate to systems and methods for a pump protection system that may be utilized in various industrial systems. The pump protection system may include a hydraulic energy transfer system that transfers work and/or pressure between first and second fluids, such as between a motive fluid and a corrosive fluid. The hydraulic energy transfer system may also be described as a hydraulic protection system, a hydraulic buffer system, or a hydraulic isolation system, because it blocks or limits contact between a corrosive fluid and various equipment (e.g., high pressure pumps), while still exchanging work and/or pressure between the motive fluid and the corrosive fluid. By blocking or limiting contact between various equipment (e.g., high pressure pumps) and the corrosive fluid, the hydraulic energy transfer system reduces corrosion, abrasion, and/or wear on the equipment, thus increasing the life and performance of the equipment. Moreover, the hydraulic energy transfer system may enable a system to use less expensive equipment, for example, high pressure pumps that are not designed for corrosive fluids.

Specifically, the pump protection system may be utilized with a variety of corrosive fluids, such as, for example, ammonium carbamate, urea, nitric acid, sulfuric acid, ammonium phosphate, calcium phosphate, sodium phosphate, phosphoric acid, hydrofluoric acid, or any other corrosive fluid that may be abrasive (e.g., particle-laden fluids, such as frac fluids), sheer sensitive, viscous, or otherwise challenging to pump. As used herein, a corrosive fluid is a fluid that causes wear to a component through a chemical process (e.g., a chemical reaction) due to contact with the component over time. Additionally, the pump protection system may be utilized with a variety of motive fluids (e.g., non-corrosive fluids), such as, for example, water, reflux water, makeup water, boiler feed water, recycled water, ammonia, condensate, etc. Further, the pump protection system may be utilized in a variety of industrial systems, within a variety of plants or processes, or within any industrial setting where a corrosive fluid needs to be pumped or otherwise displaced. For example, the pump protection system may be included within industrial systems such as urea production systems, ammonium nitrate production systems, urea ammonium nitrate (UAN) production systems, polyamide production systems, polyurethane production systems, phosphoric acid production systems, phosphate fertilizer production systems, calcium phosphate fertilizer production systems, oil refining systems, oil extraction systems, fracing systems, petrochemical systems, pharmaceutical systems, or any other industrial systems or systems that include corrosive fluids (e.g., abrasive, sheer sensitive, viscous, or otherwise challenging fluids, etc.).

In certain embodiments, the hydraulic energy transfer system may include a hydraulic turbocharger, a hydraulic pressure exchange system, or an isobaric pressure exchanger (IPX), such as a rotating IPX or a reciprocating IPX. The IPX may include one or more chambers (e.g., 1 to 100) to facilitate pressure transfer and equalization of pressures between volumes of first and second fluids (e.g., motive fluids and corrosive fluids). In some embodiments, the pressures of the volumes of first and second fluids may not completely equalize. Thus, in certain embodiments, the IPX may operate isobarically, or the IPX may operate substantially isobarically (e.g., wherein the pressures equalize within approximately +/- 1, 2, 3, 4, 5, 6, 7, 8, 9, or 10 percent of each other). In certain embodiments, a first pressure of a first fluid (e.g., pressure exchange fluid, motive fluid, clean fluid, non-corrosive fluid, etc.) may be greater than a second pressure of a second fluid (e.g., corrosive fluid). For example, the first pressure may be between approximately 5,000 kPa to 25,000 kPa, 20,000 kPa to 50,000 kPa, 40,000 kPa to 75,000 kPa, 75,000 kPa to 100,000 kPa or greater than the second pressure. Thus, the IPX may be used to transfer pressure from a first fluid (e.g., pressure exchange fluid, motive fluid, clean fluid, non-corrosive fluid, etc.) at a higher pressure to a second fluid (e.g., corrosive fluid) at a lower pressure. In particular, during operation, the hydraulic energy transfer system may help block or limit contact between the corrosive fluid and other equipment within the industrial systems (e.g., pumps). By blocking or limiting contact between pumps and the corrosive fluids, the hydraulic energy transfer system reduces corrosive, abrasion, and/or wear of various high pressure pumps within various industrial systems and, as a result, may increase the life and/or performance of the high pressure pumps.

In certain embodiments, the hydraulic energy transfer system may transfer energy from an external motive fluid at high pressure to a corrosive fluid at a low pressure while protecting a high pressure pump within the industrial system from coming in contact with the corrosive fluid. In certain embodiments, the hydraulic energy transfer system may additionally allow the motive fluid to mix with corrosive fluid, thereby creating a high pressure mixture that may be further utilized within the industrial system or may improve the efficiency of the industrial system. In certain embodiments, the motive fluid may be provided at high pressure to the hydraulic energy transfer system from a pressure letdown region of the industrial system. Further, in certain embodiments, the industrial system may include a high pressure vessel containing a high pressure motive fluid, and the hydraulic energy transfer system may be configured to transfer energy from the high pressure motive fluid to the low pressure corrosive fluid before injecting the resulting high pressure corrosive fluid into the high pressure vessel.

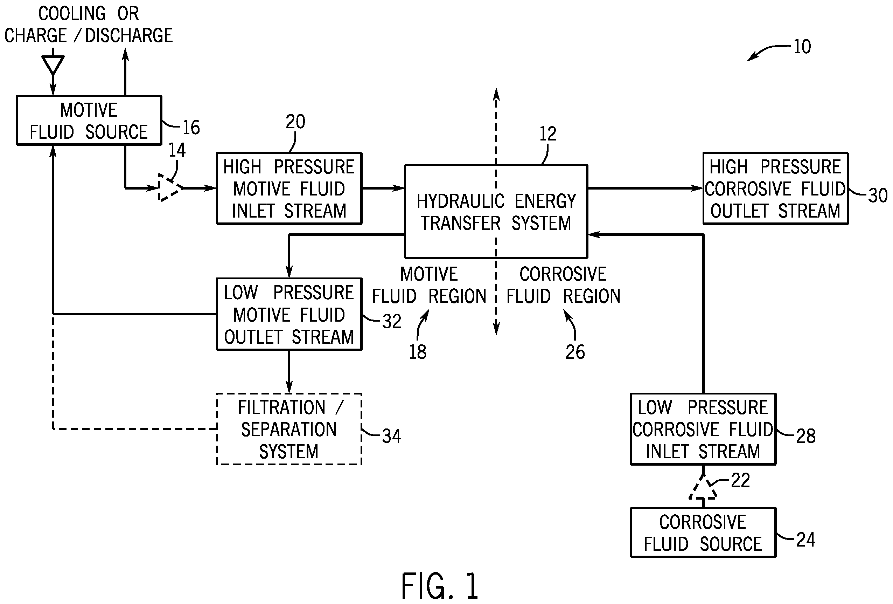

FIG. 1 is a schematic diagram of an embodiment of an industrial system 10 (e.g., a fluid handling system or a pump protection system) with a hydraulic energy transfer system 12. The hydraulic energy transfer system 12 may be configured to protect a high pressure pump from a corrosive fluid. In particular, in the illustrated embodiment, the hydraulic energy transfer system 12 (e.g., a hydraulic pressure exchange system, a hydraulic turbocharger, or an IPX, such as a rotary IPX or a reciprocating IPX) may be configured to handle the corrosive fluid and transfer energy from a motive fluid to pressurize the corrosive fluid. The motive fluid may be any non-corrosive fluid (e.g., water, reflux water, makeup water, boiler feed water, recycled water, ammonia, condensate, etc.) and may be provided to the hydraulic energy transfer system 12 at high pressures. As illustrated, a high pressure pump 14 may be configured to pump motive fluid from a motive fluid source 16 (e.g., a storage tank, a pipeline, a chemical reactor, etc.) to a motive fluid region 18 of the hydraulic energy transfer system 12. Specifically, the motive fluid may be provided as a high pressure motive fluid inlet stream 20 to the hydraulic energy transfer system 12. Further, in certain embodiments, a low pressure pump 22 may be configured to pump the corrosive fluid from a corrosive fluid source 24 (e.g., a storage tank, a pipeline, a chemical reactor, etc.) to a corrosive fluid region 26 of the hydraulic energy transfer system 12. Specifically, the corrosive fluid may be provided as a low pressure corrosive fluid inlet stream 28 to the hydraulic energy transfer system 12. In some embodiments, the industrial system 10 may not include the low pressure pump 22. For example, in some embodiments, the corrosive fluid from the corrosive fluid source 24 may be at a desired pressure.

In operation, the hydraulic energy transfer system 12 transfers pressures between the motive fluid (e.g., pumped by the high pressure pump 14) and the corrosive fluid (e.g., pumped by the low pressure pump 22). Specifically, the hydraulic energy transfer system 12 is configured to receive the motive fluid at a first pressure and the corrosive fluid at a second pressure that is less than the first pressure, to exchange pressures between the motive fluid and the corrosive fluid, and to output the corrosive fluid at a third pressure and the motive fluid at a fourth pressure that is less than the third pressure. For example, the corrosive fluid of the low pressure corrosive fluid inlet 28 may be pressurized within the hydraulic energy transfer system 12 and may exit the hydraulic energy transfer system 12 at high pressure as a high pressure corrosive fluid outlet stream 30. Further, the high pressure motive fluid of the high pressure motive fluid inlet stream 20 may be depressurized within the hydraulic energy transfer system 12 and may exit the hydraulic energy transfer system 12 as a low pressure motive fluid outlet stream 32. In this manner, the hydraulic energy transfer system 12 blocks or limits contact between the high pressure pump 14 and the corrosive fluid, thereby blocking or limiting the wear on the high pressure pump 14 that is typically caused by corrosive fluids.

In certain embodiments, the low pressure motive fluid may be provided to a filtration or separation system 34 that is configured to remove any residual corrosive fluid within the motive fluid. For example, the filtration or separation system 34 may include one or more different types of filters, including cartridge filters, slow sand filters, rapid sand filters, pressure filters, bag filters, membrane filters, granular micro media filters, backwashable strainers, backwashable sand filters, hydrocyclones, and so forth. Furthermore, the filtration or separation system 34 may include a plurality of filters, including one or more filters of each type within the filtration or separation system 34. Further, the filtered low pressure fluid may be routed back to the motive fluid source 16. The motive fluid source 16 may be external or internal to the industrial system 10. In certain embodiments, the motive fluid may be selected such that it does not react with the corrosive fluid when they come in direct contact. Furthermore, the motive fluid source 16 may be processed or prepared using any suitable processing techniques before it is provided to the high pressure pump 14. For example, in certain embodiments, the motive fluid source 16 may be cooled in a heat exchanger, charged (e.g., electrically charged) via an electric charge system, or discharged (e.g., electrically discharged) via a discharge system before it is utilized with the high pressure pump 14 and the hydraulic energy transfer system 12.

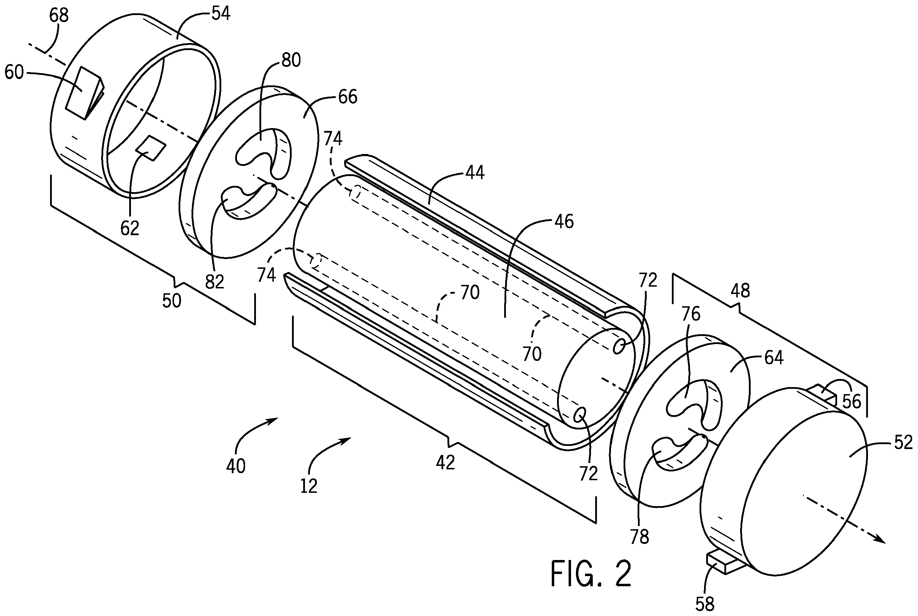

As noted above, in certain embodiments, the hydraulic energy transfer system 12 may include an isobaric pressure exchanger (IPX). As used herein, the IPX may be generally defined as a device that transfers fluid pressure between a high pressure inlet stream and a low pressure inlet stream at efficiencies in excess of approximately 50%, 60%, 70%, 80%, 90%, or more without utilizing centrifugal technology. In this context, high pressure refers to pressures greater than (e.g., 1.1, 1.5, 2, 3, 4, 5, 6, 7, 8, 9, 10, 15, 20, or more times greater) the low pressure. The low pressure inlet stream of the IPX may be pressurized and exit the IPX at high pressure (e.g., at a pressure greater than that of the low pressure inlet stream), and the high pressure inlet stream may be depressurized and exit the IPX at low pressure (e.g., at a pressure less than that of the high pressure inlet stream). Additionally, the IPX may operate with the high pressure fluid directly applying a force to pressurize the low pressure fluid, with or without a fluid separator between the fluids. Examples of fluid separators that may be used with the IPX include, but are not limited to, pistons, bladders, diaphragms and the like. In certain embodiments, isobaric pressure exchangers may be rotary devices. Rotary isobaric pressure exchangers (IPXs) 40, such as those manufactured by Energy Recovery, Inc. of San Leandro, CA, may not have any separate valves, since the effective valving action is accomplished internal to the device via the relative motion of a rotor with respect to end covers, as described in detail below with respect to FIGS. 2-6. Rotary IPXs may be designed to operate with internal pistons to isolate fluids and transfer pressure with relatively little mixing of the inlet fluid streams. Reciprocating IPXs may include a piston moving back and forth in a cylinder for transferring pressure between the fluid streams. Any IPX or plurality of IPXs may be used in the disclosed embodiments, such as, but not limited to, rotary IPXs, reciprocating IPXs, or any combination thereof. In addition, the IPX may be disposed on a skid separate from the other components of a fluid handling system, which may be desirable in situations in which the IPX is added to an existing fluid handling system.

FIG. 2 is an exploded perspective view of an embodiment of a rotary isobaric pressure exchanger 40 (rotary IPX) capable of transferring pressure and/or work between first and second fluids (e.g., motive fluid and corrosive fluid) with minimal mixing of the fluids. The rotary IPX 40 may include a generally cylindrical body portion 42 that includes a sleeve 44 (e.g., rotor sleeve) and a rotor 46. The rotary IPX 40 may also include two end caps 48 and 50 that include manifolds 52 and 54, respectively. Manifold 52 includes respective inlet and outlet ports 56 and 58, while manifold 54 includes respective inlet and outlet ports 60 and 62. In operation, these inlet ports 56, 60 enabling the first and second fluids to enter the rotary IPX 40 to exchange pressure, while the outlet ports 58, 62 enable the first and second fluids to then exit the rotary IPX 40. In operation, the inlet port 56 may receive a high-pressure first fluid (e.g., motive fluid, non-corrosive fluid, etc.), and after exchanging pressure, the outlet port 58 may be used to route a low-pressure first fluid out of the rotary IPX 40. Similarly, the inlet port 60 may receive a low-pressure second fluid (e.g., corrosive fluid) and the outlet port 62 may be used to route a high-pressure second fluid out of the rotary IPX 40. The end caps 48 and 50 include respective end covers 64 and 66 disposed within respective manifolds 52 and 54 that enable fluid sealing contact with the rotor 46. The rotor 46 may be cylindrical and disposed in the sleeve 44, which enables the rotor 46 to rotate about the axis 68. The rotor 46 may have a plurality of channels 70 extending substantially longitudinally through the rotor 46 with openings 72 and 74 at each end arranged symmetrically about the longitudinal axis 68. The openings 72 and 74 of the rotor 46 are arranged for hydraulic communication with inlet and outlet apertures 76 and 78; and 80 and 82 in the end covers 52 and 54, in such a manner that during rotation the channels 70 are exposed to fluid at high-pressure and fluid at low-pressure. As illustrated, the inlet and outlet apertures 76 and 78; and 80 and 82 may be designed in the form of arcs or segments of a circle (e.g., C-shaped).

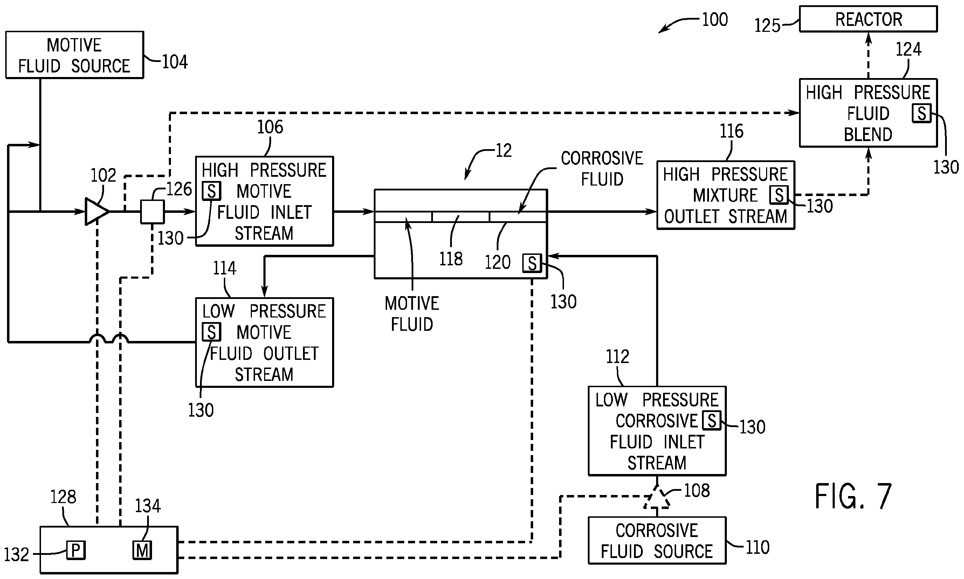

In some embodiments, a controller using sensor feedback may control the extent of mixing between the first and second fluids in the rotary IPX 40, which may be used to improve the operability of the fluid handling system. For example, varying the proportions of the first and second fluids entering the rotary IPX 40 allows the plant operator to control the amount of fluid mixing within the hydraulic energy transfer system 12. In certain embodiments, the proportion of the motive fluid may be varied with respect to the corrosive fluid to control the amount of mixing within the fluid handling system, as further described with respect to FIG. 7. Three characteristics of the rotary IPX 40 that affect mixing are: (1) the aspect ratio of the rotor channels 70, (2) the short duration of exposure between the first and second fluids, and (3) the creation of a fluid barrier (e.g., an interface) between the first and second fluids within the rotor channels 70. First, the rotor channels 70 are generally long and narrow, which stabilizes the flow within the rotary IPX 40. In addition, the first and second fluids may move through the channels 70 in a plug flow regime with minimal axial mixing. Second, in certain embodiments, the speed of the rotor 46 reduces contact between the first and second fluids. For example, the speed of the rotor 46 may reduce contact times between the first and second fluids to less than approximately 0.15 seconds, 0.10 seconds, or 0.05 seconds. Third, a small portion of the rotor channel 70 is used for the exchange of pressure between the first and second fluids. Therefore, a volume of fluid remains in the channel 70 as a barrier between the first and second fluids. All these mechanisms may limit mixing within the rotary IPX 40. Moreover, in some embodiments, the rotary IPX 40 may be designed to operate with internal pistons that isolate the first and second fluids while enabling pressure transfer.

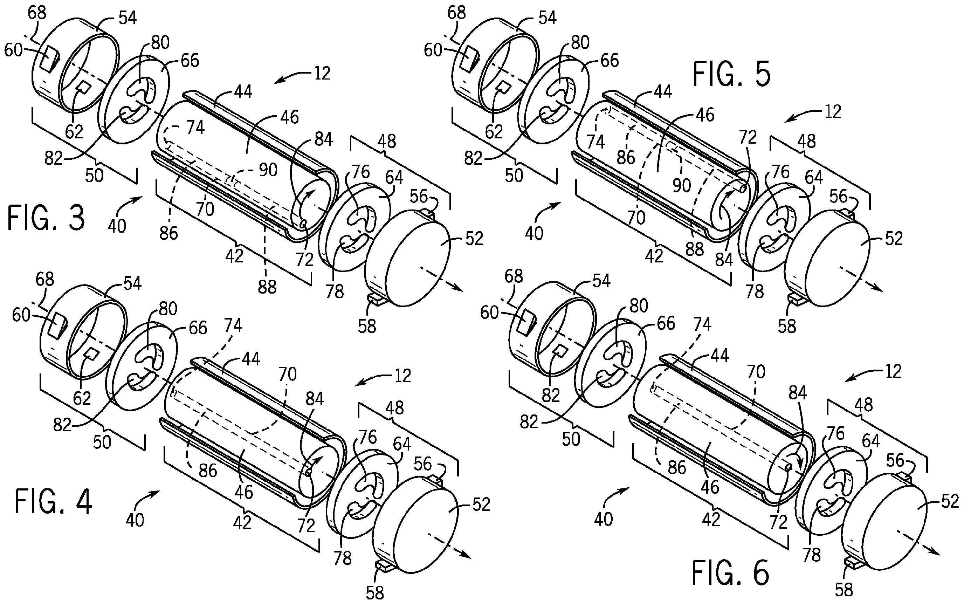

FIGS. 3-6 are exploded views of an embodiment of the rotary IPX 40 illustrating the sequence of positions of a single channel 70 in the rotor 46 as the channel 70 rotates through a complete cycle. It is noted that FIGS. 3-6 are simplifications of the rotary IPX 40 showing one channel 70, and the channel 70 is shown as having a circular cross-sectional shape. In other embodiments, the rotary IPX 40 may include a plurality of channels 70 with the same or different cross-sectional shapes (e.g., circular, oval, square, rectangular, polygonal, etc.). Thus, FIGS. 3-6 are simplifications for purposes of illustration, and other embodiments of the rotary IPX 40 may have configurations different from that shown in FIGS. 3-6. As described in detail below, the rotary IPX 40 facilitates pressure exchange between first and second fluids (e.g., motive fluid and corrosive fluid) by enabling the first and second fluids to briefly contact each other within the rotor 46. In certain embodiments, this exchange happens at speeds that result in limited mixing of the first and second fluids.

In FIG. 3, the channel opening 72 is in a first position. In the first position, the channel opening 72 is in fluid communication with the aperture 78 in endplate 64 and therefore with the manifold 52, while the opposing channel opening 74 is in hydraulic communication with the aperture 82 in end cover 66 and by extension with the manifold 54. As will be discussed below, the rotor 46 may rotate in the clockwise direction indicated by arrow 84. In operation, low-pressure second fluid 86 passes through end cover 66 and enters the channel 70, where it contacts the first fluid 88 at a dynamic fluid interface 90. The second fluid 86 then drives the first fluid 88 out of the channel 70, through end cover 64, and out of the rotary IPX 40. However, because of the short duration of contact, there is minimal mixing between the second fluid 86 and the first fluid 88.

In FIG. 4, the channel 70 has rotated clockwise through an arc of approximately 90 degrees. In this position, the outlet 74 is no longer in fluid communication with the apertures 80 and 82 of end cover 66, and the opening 72 is no longer in fluid communication with the apertures 76 and 78 of end cover 64. Accordingly, the low-pressure second fluid 86 is temporarily contained within the channel 70.

In FIG. 5, the channel 70 has rotated through approximately 60 degrees of arc from the position shown in FIG. 3. The opening 74 is now in fluid communication with aperture 80 in end cover 66, and the opening 72 of the channel 70 is now in fluid communication with aperture 76 of the end cover 64. In this position, high-pressure first fluid 88 enters and pressurizes the low-pressure second fluid 86 driving the second fluid 86 out of the fluid channel 70 and through the aperture 80 for use in the industrial system 10 (e.g., fluid handling system or pump protection system).

In FIG. 6, the channel 70 has rotated through approximately 270 degrees of arc from the position shown in FIG. 3. In this position, the outlet 74 is no longer in fluid communication with the apertures 80 and 82 of end cover 66, and the opening 72 is no longer in fluid communication with the apertures 76 and 78 of end cover 64. Accordingly, the first fluid 88 is no longer pressurized and is temporarily contained within the channel 70 until the rotor 46 rotates another 90 degrees, starting the cycle over again.

FIG. 7 is a schematic diagram of an embodiment of an industrial system 100 (e.g., a fluid handling system or a pump protection system) with the hydraulic energy transfer system 12 of FIG. 1. As will be described in detail below, the industrial system 100 may mix a portion of motive fluid with a portion of corrosive fluid to generate a mixture (e.g., a high pressure mixture or a high pressure blend) of motive fluid and corrosive fluid. For example, it may be useful to have a high pressure mixture or high pressure blend of the motive fluid with the corrosive fluid, as this may help speed up the rate of reaction of various processes within the industrial system 100. For example, in urea production, liquid ammonia (e.g., motive fluid) may be mixed with ammonium carbamate (e.g., corrosive fluid), and the resulting mixture may be utilized for other steps within the urea production process.

In the illustrated embodiment, the industrial system 100 includes a high pressure pump 102 configured to pressurize motive fluid from a motive fluid source 104 and to provide (e.g., route) the motive fluid as a high pressure motive fluid inlet stream 106 to the hydraulic energy transfer system 12. For example, the high pressure motive fluid inlet stream 106 may be routed through a high pressure inlet (e.g., the inlet 56) of the hydraulic energy transfer system 12. Further, in certain embodiments, a low pressure pump 108 may be configured to pump corrosive fluid from a corrosive fluid source 110 and to provide (e.g., route) the corrosive fluid as a low pressure corrosive fluid inlet stream 112 to the hydraulic energy transfer system 12. For example, the low pressure corrosive fluid inlet stream 112 may be routed through a low pressure inlet (e.g., the inlet 60) of the hydraulic energy transfer system 12. In some embodiments, the industrial system 100 may not include the low pressure pump 108. For example, in some embodiments, the corrosive fluid from the corrosive fluid source 110 may already be at a desired pressure.

In operation, the hydraulic energy transfer system 12 transfers pressures between the high pressure motive fluid inlet stream 106 and the low pressure corrosive fluid inlet stream 112. In this manner, the hydraulic energy transfer system 12 blocks or limits contact between the high pressure pump 102 and the corrosive fluid, thereby blocking or limiting the wear on the high pressure pump 102 that is typically caused by corrosive fluids. In particular, the corrosive fluid of the low pressure corrosive fluid inlet stream 112 may be pressurized within the hydraulic energy transfer system 12 and may exit the hydraulic energy transfer system 12 at high pressure, and the high pressure motive fluid of the high pressure motive fluid inlet stream 106 may be depressurized within the hydraulic energy transfer system 12 and may exit the hydraulic energy transfer system 12 at low pressure as low pressure motive fluid outlet stream 114. For example, the low pressure motive fluid outlet stream 114 may exit through a low pressure outlet (e.g., the outlet 58) of the hydraulic energy transfer system 12.

Further, the corrosive fluid from the low pressure corrosive fluid inlet stream 112 may mix with the motive fluid from the high pressure motive fluid inlet stream 106 within the hydraulic energy transfer system 12 and may exit the hydraulic energy transfer system 12 as a high pressure mixture outlet stream 116. For example, the high pressure mixture outlet stream 116 may exit through a high pressure outlet (e.g., the outlet 62) of the hydraulic energy transfer system. In particular, as will be described in detail below, asymmetrical flow (e.g., different amounts, different flow rates, etc.) of the high pressure motive fluid inlet stream 106 and the low pressure corrosive fluid inlet stream 112 may be utilized by the hydraulic energy transfer system 12 to promote the desired amount of mixing between the motive fluid and the corrosive fluid, thereby resulting in the desired proportion or ratio of motive fluid to corrosive fluid in the high pressure mixture outlet stream 116. Further, the asymmetrical flow (e.g., different amounts, different flow rates, etc.) of the high pressure motive fluid inlet stream 106 and the low pressure corrosive fluid inlet stream 112 may be utilized by the hydraulic energy transfer system 12 to minimize or reduce the amount of corrosive fluid exiting with the low pressure motive fluid outlet stream 114, and coming in contact with the high pressure pump 102. For example, in some embodiments, it may be beneficial to have a greater amount of high pressure motive fluid inlet stream 106 provided to the hydraulic energy transfer system 12 than the low pressure corrosive fluid inlet stream 112, to help reduce the amount of corrosive fluid that exits with the low pressure motive fluid outlet stream 114 and/or to facilitate the mixing of the motive fluid with the corrosive fluid within the hydraulic energy transfer system 12.

As noted above, the asymmetrical amount of flow at the high pressure motive fluid inlet stream 106 and the low pressure corrosive fluid inlet stream 112 may lead to mixing of the motive fluid and the corrosive fluid within the hydraulic energy transfer system 12. Specifically, the motive fluid and the corrosive fluid may contact one another at a mixing interface 118 (e.g., interface 90) within a channel 120 (e.g., a channel of the plurality of channels 70) of the hydraulic energy transfer system 12. In certain embodiments, the mixing interface 118 may be a direct contact interface. It should be noted that different flows (e.g., amounts or units) of the high pressure motive fluid inlet stream 106 and the low pressure corrosive fluid inlet stream 112 may be utilized to achieve a desired mixing between the motive fluid and the corrosive fluid and thus, a desired ratio of motive fluid to corrosive fluid in the high pressure mixture outlet stream 116. For example, the desired ratio of motive fluid to corrosive fluid may be dependent on the industrial process or system, or the desired rate of reaction between the motive fluid and the corrosive fluid.

In some embodiments, the hydraulic energy transfer system 12 may receive a first amount (e.g., a first flow) of the high pressure motive fluid inlet stream 106 and a second amount (e.g., a second flow) of the low pressure corrosive fluid inlet stream 112 that is different than (e.g., less than) the first amount. For example, to achieve a desired amount of mixing of the motive fluid and the corrosive fluid at the mixing interface 118, the hydraulic energy transfer system 12 may receive x units of the high pressure motive fluid inlet stream 106 and y units of the low pressure corrosive fluid inlet stream 112, wherein a ratio of x to y is between 0.1 to 20, 0.2 to 15, 0.3 to 10, 0.4 to 5, or 0.5 to 3. In some embodiments, x may be at least 1.1, 1.5, 2, 3, 4, 5, 6, 7, 8, 9, or 10 times greater than y. In some embodiments, the hydraulic energy transfer system 12 may receive 20 units of the high pressure motive fluid inlet stream 106 and 10 units of the low pressure corrosive fluid inlet stream 112 to achieve a desired amount of mixing of the motive fluid and the corrosive fluid at the mixing interface 118. For example, the resulting high pressure mixture outlet stream 116 may include approximately 10 units of motive fluid and approximately 10 units of corrosive fluid. Further, the asymmetrical flow of the high pressure motive fluid inlet stream 106 and the low pressure corrosive fluid inlet stream 112 may help reduce the amount of corrosive fluid within the low pressure motive fluid outlet stream 114. For example, the low pressure motive fluid outlet stream 114 may include 10 units of motive fluid and less than 0.5% of corrosive fluid. In some embodiments, by providing the asymmetrical flow of the high pressure motive fluid inlet stream 106 and the low pressure corrosive fluid inlet stream 112, the low pressure motive fluid outlet stream 114 may include a percentage (e.g., a volume percentage or a weight percentage) of corrosive fluid that is 5%, 4%, 3%, 2%, 1%, 0.75%, 0.5%, 0.25%, 0.1% or less.

In certain embodiments, the resulting high pressure mixture outlet stream 116 may be additionally mixed with motive fluid to create a high pressure fluid blend 124. For example, the high pressure fluid blend 124 may be used to facilitate reactions (e.g., increase the rate of reactions) of various processes within the industrial system 100. Accordingly, the high pressure fluid blend 124 may be routed (e.g., via one or more valves or pumps) to a chemical reactor 125 of the industrial system 100, and the high pressure fluid blend 124 may increase a rate of a reaction within the chemical reactor 125. For example, in some embodiments, the industrial system 100 may be a urea production system, and the high pressure fluid blend 124 may include liquid ammonia (e.g., motive fluid) and ammonium carbamate (e.g., corrosive fluid) and may be utilized for steps within the chemical reactor 125 as part of a urea production process. It should be noted that in some embodiments, the high pressure mixture outlet stream 116 may be routed to the chemical reactor 125 without further mixing with the motive fluid. That is, the high pressure mixture outlet stream 116 may already have a desired ratio of motive fluid to corrosive fluid to increase a rate of a reaction within the chemical reactor 125.

In some embodiments, a first portion of the high pressure motive fluid from the high pressure pump 102 may be routed to the high pressure motive fluid inlet stream 106 and a second portion of the high pressure motive fluid from the high pressure pump 102 may be mixed with the high pressure mixture outlet stream 116 to create the high pressure fluid blend 124. In some embodiments, the industrial system 100 may include a circulation pump or valve (e.g., control valve) 126 configured to route the first portion of the high pressure motive fluid to the high pressure motive fluid inlet stream 106, and the high pressure pump 102 may route the second portion of the high pressure motive fluid to mix with the high pressure mixture outlet stream 116. It should be noted that any type of routing or flow splitting techniques may be utilized to route the motive fluid. Further, in some embodiments, the high pressure pump 102 may receive 90 units of motive fluid from the motive fluid source 104 and 10 units of motive fluid from the low pressure motive fluid outlet stream 114. Additionally, in the some embodiments, the pump 126 may route 20 units of motive fluid to the high pressure motive fluid inlet stream 106, and the high pressure pump 106 may route 80 units of motive fluid (e.g., to a tank or a mixer) to mix with the high pressure mixture outlet stream 116 (e.g., 10 units of motive fluid and 10 units of corrosive fluid) to create the high pressure fluid blend 124. Accordingly, in the illustrated embodiment, the resulting high pressure fluid blend 124 may include 90 units of motive fluid and approximately 10 units of corrosive fluid. It should be noted that the described quantities and ratios of motive fluid and corrosive fluid are approximate values, and are intended for illustrative purposes only. Further, in certain embodiments, any ratio of motive fluid to corrosive fluid in the high pressure mixture outlet stream 116 and/or the high pressure fluid blend 124 may be produced, such as a 1:1 ratio, a 2:1 ratio, a 3:1 ratio, a 4:1 ratio, a 5:1 ratio, a 6:1 ratio, a 7:1 ratio, an 8:1 ratio, a 9:1 ratio, a 10:1 ratio, or more; or a 1:2 ratio, a 1:3 ratio, a 1:4 ratio, a 1:5 ratio, a 1:6 ratio, a 1:7 ratio, a 1:8 ratio, a 1:9 ratio, a 1:10 ratio, or more. Indeed, the asymmetrical flow of the high pressure motive fluid inlet stream 106 and the low pressure corrosive fluid inlet stream 112 may also be established based on the desired ratio of motive fluid to corrosive fluid.

In some embodiments, the industrial system 100 may include a controller 128 to control the amount (e.g., flow) of the high pressure motive fluid inlet stream 106, the amount (e.g., flow) of the low pressure fluid inlet 112, the high pressure pump 106, and/or the circulation pump or control valve 126 to control the ratio of the motive fluid to the corrosive fluid in the high pressure mixture outlet stream 116 and/or the high pressure fluid blend 124. Further, in some embodiments, the controller 128 may control the amount (e.g., flow) of the high pressure motive fluid inlet stream 106, the amount (e.g., flow) of the low pressure fluid inlet 112, the high pressure pump 106, and/or the circulation pump or control valve 126 to control the percentage of the corrosive fluid in the low pressure motive fluid outlet stream 114. For example, the controller 128 may be operatively coupled (e.g., via one or more wired or wireless connections) to the hydraulic energy transfer system 12, the high pressure pump 106, the circulation pump or control valve 126, and/or the low pressure pump 108. Additionally, the controller 128 may be operatively coupled to (e.g., via one or more wired or wireless connections) one or more sensors 130 (e.g., flow, pressure, torque, rotational speed, acoustic, magnetic, optical, composition, etc.). The one or more sensors 130 may generate feedback relating to the high pressure motive fluid inlet stream 106, the low pressure corrosive fluid inlet stream 112, the low pressure motive fluid outlet stream 114, the high pressure mixture outlet stream 116, the high pressure fluid blend 124, the hydraulic energy transfer system 12, or any other suitable components of the industrial system 100. In operation, the controller 128 uses the feedback from the sensors 130 to control the industrial system 100. In particular, the controller 128 may use the feedback from the sensors 130 to control the flow of the high pressure motive fluid inlet stream 106, the flow of the low pressure corrosive fluid inlet stream 112, the operating speed of the hydraulic energy transfer system 12, the high pressure pump 106, and/or the circulation pump or control valve 126 to control the ratio of the motive fluid to the corrosive fluid in the high pressure mixture outlet stream 116 and/or the high pressure fluid blend 124. The controller 128 may include a processor 132 and a memory 134 that stores tangible, non-transitory computer instructions executable by the processor 132. For example, as the controller 128 receives feedback from one or more sensors 130, the processor 132 may execute instructions stored in the memory 134 to control the ratio of the motive fluid to the corrosive fluid in the high pressure mixture outlet stream 116 and/or the high pressure fluid blend 124.

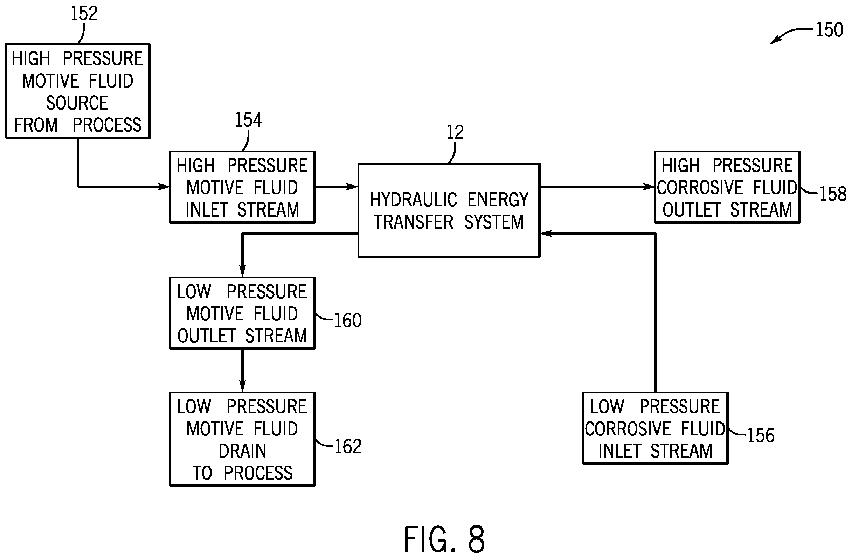

FIG. 8 is a schematic diagram of an embodiment of an industrial system 150 (e.g., a fluid handling system or a pump protection system) with the hydraulic energy transfer system 12 of FIG. 1. In the illustrated embodiment, the motive fluid may be sourced from a pressure letdown region within the industrial system 150. More specifically, in various industrial systems and processes, the pressure of various fluids may need to be letdown during the production process. This may be done with one or more series of reactors, where each reactor within the series is configured to letdown the pressure by a specific amount. For example, within urea synthesis systems, there may opportunities to letdown the pressure of certain fluids (e.g., ammonia, urea, ammonium carbamate, etc.) from a high pressure to a medium pressure or from a medium pressure to a low pressure via one or more reactors.

Accordingly, in certain embodiments, high pressure motive fluid may be sourced from a high pressure motive fluid source 152 from within the industrial system 150. For example, in some embodiments, the high pressure motive fluid source 152 may be a chemical reactor (e.g., a high pressure or a medium pressure chemical reactor) within the industrial system 150 configured to provide a pressure letdown stream of high pressure motive fluid. In some embodiments, the high pressure motive fluid source 152 may be any suitable process stream (e.g., a pressure letdown stream) from the industrial system 150. The high pressure motive fluid is provided as a high pressure motive fluid inlet stream 154 to the hydraulic energy transfer system 12. For example, the hydraulic energy transfer system 12 may receive the high pressure motive fluid inlet stream 154 through a high pressure inlet (e.g., the inlet 56). Additionally, the hydraulic energy transfer system 12 may receive a low pressure corrosive fluid inlet stream 156 (e.g., from a low pressure corrosive fluid source). For example, the hydraulic energy transfer system 12 may receive the low pressure corrosive fluid inlet stream 156 through a low pressure inlet (e.g., the inlet 60). As noted above, the hydraulic energy transfer system 12 may exchange pressure between the high pressure motive fluid and the low pressure corrosive fluid, such that the low pressure corrosive fluid is output as a high pressure corrosive fluid outlet stream 158 (e.g., through the outlet 62) and the high pressure motive fluid is output as a low pressure motive fluid outlet stream 160 (e.g., through the outlet 58). In some embodiments, the low pressure motive fluid outlet stream 160 from the hydraulic energy transfer system 12 may be provided as low pressure motive fluid drain 162 back into the industrial system 150.

In this manner, the hydraulic energy transfer system 12 may be configured to provide both energy recovery and pump protection. For example, the integration of the hydraulic energy transfer system 12 into the industrial system 150, and specifically within the letdown regions, may help with the letdown process, and in some instances, may enable the industrial system 150 to operate with fewer or no letdown reactors. Furthermore, the hydraulic energy recovery system 12 may help protect any high pressure pumps within the industrial system 150 from coming in contact with the corrosive fluids, as described above with respect to FIGS. 1 and 7.

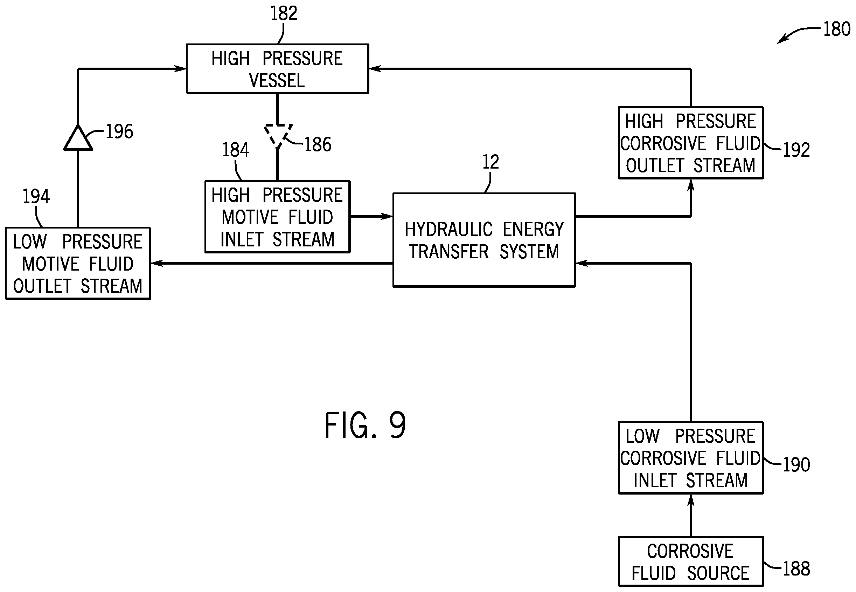

FIG. 9 is a schematic diagram of an embodiment of an industrial system 180 (e.g., a fluid handling system or a pump protection system) with the hydraulic energy transfer system 12 of FIG. 1. Specifically, the industrial system 180 includes a high pressure vessel 182 (e.g., high pressure storage tank, high pressure pipeline, a high pressure chemical reactor, or a high pressure chemical reaction vessel) that is configured to store and/or route the motive fluid. In some embodiments, such as within certain industrial systems (e.g., urea synthesis systems), it may be beneficial to inject a high pressure corrosive fluid into the high pressure vessel 182 without the use of high pressure pumps, as further explained below.

In certain embodiments, high pressure motive fluid may be sourced from the high pressure vessel 182. For example, the high pressure vessel 182 may be a high pressure pipeline, storage tank, a chemical reactor, or chemical reaction vessel. In certain embodiments, the high pressure motive fluid may be routed directly from the high pressure vessel 182 as a high pressure motive fluid inlet stream 184 without the use of additional high pressure pumps configured to pressurize the motive fluid. For example, the high pressure motive fluid inlet stream 184 may be routed through a high pressure inlet (e.g., the inlet 56) of the hydraulic energy transfer system 12. In some embodiments, one or more circulation pumps or valves 186 may be utilized to route the high pressure motive fluid from the high pressure vessel 182 to the high pressure motive fluid inlet stream 184. Additionally, a low pressure corrosive fluid may be routed from a corrosive fluid source 188 into a low pressure corrosive fluid inlet stream 190. The low pressure corrosive fluid inlet stream 90 may be routed through a low pressure inlet (e.g., the inlet 60) of the hydraulic energy transfer system. As noted above, the hydraulic energy transfer system 12 may exchange pressures between the high pressure motive fluid and the low pressure corrosive fluid and may output the corrosive fluid at a high pressure as a high pressure corrosive fluid outlet stream 192 (e.g., through the outlet 62). The high pressure corrosive fluid outlet stream 192 may be routed and/or injected into the high pressure vessel 182 (e.g., via one or more pumps and/or control valves). Further, the hydraulic energy transfer system 12 may output the motive fluid at low pressure as a low pressure motive fluid outlet stream 194 (e.g., through the outlet 58). In some embodiments, the low pressure motive fluid outlet stream 194 may be routed to a high pressure pump 196. The high pressure pump 196 may be configured to pressurize the motive fluid to an appropriate or desired pressure (e.g., to the pressure of the high pressure motive fluid inlet 184) before routing or injecting the motive fluid into the high pressure vessel 182. In this manner, the high pressure pump 196 may be configured to handle only the motive fluid, and the hydraulic energy transfer system 12 may block or limit contact between the high pressure pump 196 and the corrosive fluid, thereby helping to reduce the challenges that result from exposure to corrosive fluids.

In certain embodiments, the high pressure corrosive fluid within the high pressure vessel 182 may be removed from the high pressure vessel 182 before the high pressure motive fluid from the high pressure pump 196 is routed to the high pressure vessel 182. For example, in some embodiments, the high pressure corrosive fluid may be routed from the high pressure vessel 182 (e.g., storage tank, pipeline, chemical reactor, or chemical reaction vessel) to another component (e.g., a storage tank, a chemical reactor, a pipeline, a chemical reaction vessel, etc.) of the industrial system 180. In some embodiments, the high pressure vessel 182 may include both the high pressure corrosive fluid and the high pressure motive fluid. For example, in some embodiments, the high pressure vessel 182 may be a chemical reactor or chemical reaction vessel configured to produce the high pressure motive fluid via one or more chemical reactions. In some embodiments, an output stream from the high pressure vessel 182 may be filtered (e.g., using the separation or filtration system 34) to separate the motive fluid from the corrosive fluid and/or to remove the corrosive fluid from the motive fluid, and the filtered motive fluid may be provided as the high pressure motive fluid inlet stream 184.

It should be noted that any of the different embodiments and techniques described herein may be utilized together. For example, in certain embodiments, the hydraulic energy transfer system 12 may be configured to mix the motive fluid with the corrosive fluid (as described with respect to FIG. 7), before injecting the resulting high pressure mixture (e.g., the high pressure mixture outlet stream 116 or the high pressure fluid blend 126) into the high pressure vessel 182 (as described with respect to FIG. 9). As a further example, the separation or filtration system 34 (as described with respect to FIG. 1) may be utilized within any of the embodiments described with respect to FIGS. 7-9. Additionally, in some embodiments, the controller 128 and/or the sensors 130 (as described with respect to FIG. 7) may be incorporated in any of the embodiments described above, such as in the industrial system 10, the industrial system 150, and/or the industrial system 180. For example, the controller 128 and/or the sensors 130 may control various components of the industrial systems 10, 150, and/or 180, such as the hydraulic energy transfer system 12, the high pressure motive fluid inlet streams 20, 154, and/or 184, the low pressure corrosive fluid inlet streams 28, 156, and/or 190, the low pressure motive fluid outlet streams 32, 160, and/or 194, the high pressure corrosive fluid outlet streams 30, 158, and/or 192, the filtration and/or separation system 34, the pumps 14, 196, and/or 186, or any other suitable components.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the scope of the invention as defined by the following appended claims.

## Claims

1. A system, comprising:
a non-corrosive fluid source (16, 104, 152, 182);
a corrosive fluid source (24, 110, 188);
a rotary isobaric pressure exchanger (12, 40) configured to exchange pressures between a non-corrosive fluid and a corrosive fluid, wherein the rotary isobaric pressure exchanger (12, 40) comprises:
a first inlet (56) configured to receive a first amount of the non-corrosive fluid from the non-corrosive fluid source (16, 104, 152, 182) at a first pressure;
a second inlet (60) configured to receive a second amount of the corrosive fluid from the corrosive fluid source (24, 110, 188) at a second pressure, wherein the first pressure is greater than the second pressure, and the first amount is greater than the second amount;
a first outlet (62) configured to output a first mixture of the corrosive fluid and the non-corrosive fluid at a third pressure; and
a second outlet (58) configured to output the non-corrosive fluid at a fourth pressure, wherein the third pressure is greater than the fourth pressure;
the system further comprising:
a controller (128) configured to control the first amount of the non-corrosive fluid and the second amount of the corrosive fluid to control a ratio of non-corrosive fluid to corrosive fluid in the first mixture of the corrosive fluid and the non-corrosive fluid.

2. The system of claim 1, wherein the corrosive fluid comprises ammonium carbamate, urea, nitric acid, sulphuric acid, or a combination thereof.

3. The system of claim 1 or 2, wherein the second outlet (58) is configured to output a second mixture of the corrosive fluid and the non-corrosive fluid at the fourth pressure, and a percentage of the corrosive fluid in the second mixture is less than 5%.

4. The system of claim 3, wherein the controller (128) is further configured to control the first amount of the non-corrosive fluid and the second amount of the corrosive fluid to control the percentage of the corrosive fluid in the second mixture.

5. The system of any of the preceding claims, comprising a chemical reactor (125) configured to receive the first mixture of the corrosive fluid and the non-corrosive fluid, wherein the first mixture increases a rate of a chemical reaction within the chemical reactor.

6. The system of any of claims 1-4, comprising a chemical reactor configured to provide a pressure letdown stream comprising the non-corrosive fluid at the first pressure.

7. The system of any of the preceding claims, further comprising:
an industrial system, wherein the industrial system (10, 100, 150, 180) comprises the rotary isobaric pressure exchanger (12, 40).

8. The system of claim 7, wherein the industrial system (10, 100, 150, 180) comprises:
a pump or valve configured to route the non-corrosive fluid at the first pressure to the first mixture of the corrosive fluid and the non-corrosive fluid to create a third mixture (124) of the corrosive fluid and the non-corrosive fluid; and
a chemical reactor (125) configured to receive the third mixture (124) of the corrosive fluid and the non-corrosive fluid, wherein the third mixture increases a rate of a chemical reaction within the chemical reactor (125).

9. The system of claim 7 or 8, wherein the industrial system (10, 100, 150, 180) comprises:
a high pressure vessel (182) configured to contain the non-corrosive fluid at high pressure;
a first pump (186) configured to receive the non-corrosive fluid from the high pressure vessel (182) and to route the first amount of the non-corrosive fluid at the first pressure to the rotary isobaric pressure exchanger (12, 40); and
a high pressure pump (194) configured to receive the non-corrosive fluid at the fourth pressure from the rotary isobaric pressure exchanger (12, 40), pressurize the non-corrosive fluid, and route the pressurized non-corrosive fluid to the high pressure vessel (182);
wherein the rotary isobaric pressure exchanger (12, 40) is configured to route the first mixture of the non-corrosive fluid and the corrosive fluid at the third pressure to the high pressure vessel (182).

10. A method, comprising:
receiving a first amount of a non-corrosive fluid from a non-corrosive fluid source (16, 104, 152, 182) at high pressure at a first fluid inlet (56) of a rotary isobaric pressure exchanger (12, 40);
receiving a second amount of a corrosive fluid from a corrosive fluid source (24, 110, 188) at low pressure at a second fluid inlet (60) of the rotary isobaric pressure exchanger (12, 40), wherein the first amount is greater than the second amount;
exchanging pressures between the non-corrosive fluid and the corrosive fluid using the rotary isobaric pressure exchanger (12, 40);
outputting a first mixture of the corrosive fluid and the non-corrosive fluid at high pressure from a first fluid outlet (62) of the rotary isobaric pressure exchanger (12, 40);
outputting the non-corrosive fluid at low pressure from a second fluid outlet (58) of the rotary isobaric pressure exchanger (12, 40); and
controlling, using a controller (128), a ratio of non-corrosive fluid to corrosive fluid in the first mixture of the corrosive fluid and the non-corrosive fluid by controlling the first amount of the non-corrosive fluid and the second amount of the corrosive fluid.

11. The method of clam 10, comprising outputting a second mixture of the non-corrosive fluid and the corrosive fluid at low pressure from the second fluid outlet (58) of the rotary isobaric pressure exchanger (12, 40), wherein a percentage of corrosive fluid in the second mixture is less than 5%.

## Patentansprüche

1. Ein System, umfassend:
eine Quelle (16, 104, 152, 182) nicht korrosiven Fluids,
eine Quelle (24, 110, 188) korrosiven Fluids,
einen rotierenden isobaren Druckaustauscher (12, 40), der konfiguriert ist zum Austauschen von Drücken zwischen einem nicht korrosiven Fluid und einem korrosiven Fluid, wobei der rotierende isobare Druckaustauscher (12, 40) umfasst:
einen ersten Einlass (56), der konfiguriert ist, um eine erste Menge des nicht korrosiven Fluids aus der Quelle (16, 104, 152, 182) nicht korrosiven Fluids bei einem ersten Druck aufzunehmen;
einen zweiten Einlass (60), der konfiguriert ist, um eine zweite Menge des korrosiven Fluids aus der Quelle (24, 110, 188) korrosiven Fluids bei einem zweiten Druck aufzunehmen, wobei der erste Druck größer als der zweite Druck ist und die erste Menge größer als die zweite Menge ist;
einen ersten Auslass (62), der konfiguriert ist, um eine erste Mischung des korrosiven Fluids und des nicht korrosiven Fluids bei einem dritten Druck auszugeben; und
einen zweiten Auslass (58), der konfiguriert ist, um das nicht korrosive Fluid bei einem vierten Druck auszugeben, wobei der dritte Druck größer als der vierte Druck ist;
wobei das System ferner umfasst:
eine Steuerung (128), die dazu konfiguriert ist, die erste Menge des nicht korrosiven Fluids und die zweiten Menge des korrosiven Fluids zu steuern, um ein Verhältnis von nicht korrosivem Fluid zu korrosivem Fluid in der ersten Mischung des korrosiven Fluids und des nicht korrosiven Fluids zu steuern.

2. System nach Anspruch 1, wobei das korrosive Fluid Ammoniumcarbonat, Harnstoff, Salpetersäure, Schwefelsäure oder eine Kombination davon umfasst.

3. System nach Anspruch 1 oder 2, wobei der zweite Auslass (58) so konfiguriert ist, dass er eine zweite Mischung des korrosiven Fluids und des nicht korrosiven Fluids mit dem vierten Druck ausgibt, und ein Prozentsatz des korrosiven Fluids in der zweiten Mischung weniger als 5% beträgt.

4. System nach Anspruch 3, wobei die Steuerung (128) ferner konfiguriert ist, die erste Menge des nicht korrosiven Fluids und die zweite Menge des korrosiven Fluids zu steuern, um den Prozentsatz des korrosiven Fluids in der zweiten Mischung zu steuern.

5. System nach einem der vorigen Ansprüche, umfassend einen chemischen Reaktor (125), der zum Aufnehmen der ersten Mischung des korrosiven Fluids und des nicht korrosiven Fluids konfiguriert ist, wobei die erste Mischung eine Geschwindigkeit einer chemischen Reaktion innerhalb des chemischen Reaktors erhöht.

6. System nach einem der Ansprüche 1 - 4, umfassend einen chemischen Reaktor, der konfiguriert ist, um einen Druckentspannungsstrom bereitzustellen, der das nicht korrosive Fluid mit dem ersten Druck umfasst.

7. System nach einem der vorigen Ansprüche, ferner umfassend:
ein industrielles System, wobei das industrielle System (10, 100, 150, 180) einen rotierenden isobaren Druckaustauscher (12, 40) umfasst.

8. System nach Anspruch 7, wobei das industrielle System (10, 100, 150, 180) umfasst:
eine Pumpe oder ein Ventil, die so konfiguriert ist, dass sie das nicht korrodierende Fluid mit dem ersten Druck zu der ersten Mischung aus dem korrosiven Fluid und dem nicht korrosiven Fluid leitet, um eine dritte Mischung (124) des korrosiven Fluid und des nicht korrosiven Fluid zu erzeugen; und
einen chemischen Reaktor (125), der zum Aufnehmen der dritten Mischung (124) des korrosiven Fluids und des nicht korrosiven Fluids konfiguriert ist, wobei die dritte Mischung eine Geschwindigkeit einer chemischen Reaktion innerhalb des chemischen Reaktors (125) erhöht.

9. System nach Anspruch 7 oder 8, wobei das industrielle System (10, 100, 150, 180) umfasst:
einen Hochdruckbehälter (182), der so konfiguriert ist, dass er das nicht korrosive Fluid bei hohem Druck enthält;
eine erste Pumpe (186), die so konfiguriert ist, dass sie das nicht korrosive Fluid aus dem Hochdruckbehälter (182) aufnimmt und die erste Menge des nicht korrosiven Fluids mit dem ersten Druck zum rotierenden isobaren Druckaustauscher (12, 40) leitet; und
eine Hochdruckpumpe (194), die so konfiguriert ist, dass sie das nicht korrosive Fluid mit dem vierten Druck von dem rotierenden isobaren Druckaustauscher (12, 40) aufnimmt, das nicht korrosive Fluid unter Druck setzt und das unter Druck stehende nicht korrosive Fluid zu dem Hochdruckbehälter (182) leitet;
wobei der rotierende isobare Druckaustauscher (12, 40) konfiguriert ist, um die erste Mischung des nicht korrosiven Fluids und des korrosiven Fluids mit dem dritten Druck zum Hochdruckbehälter (182) zu leiten.

10. Ein Verfahren, umfassend:
Empfangen einer ersten Menge eines nicht korrosiven Fluids aus einer Quelle (16, 104, 152, 182) nicht korrosiven Fluids bei hohem Druck an einem ersten Fluideingang (56) eines rotierenden isobaren Druckaustauschers (12, 40);
Empfangen einer zweiten Menge eines korrosiven Fluids aus einer Quelle (24, 110, 188) korrosiven Fluids bei niedrigem Druck an einem zweiten Fluideinlass (60) des rotierenden isobaren Druckaustauschers (12, 40), wobei die erste Menge größer als die zweite Menge ist;
Austauschen von Drücken zwischen dem nicht korrosiven Fluid und dem korrosiven Fluid unter Verwendung des rotierenden isobaren Druckaustauschers (12, 40);
Ausgeben einer ersten Mischung des korrosiven Fluids und des nicht korrosiven Fluids bei hohem Druck von einem ersten Fluidauslass (62) des rotierenden isobaren Druckaustauschers (12, 40);
Ausgeben des nicht korrosiven Fluids bei niedrigem Druck von einem zweiten Fluidauslass (58) des rotierenden isobaren Druckaustauschers (12, 40), und
Steuern, unter Verwendung einer Steuerung (128), eines Verhältnisses von nicht korrosivem Fluid zu korrosivem Fluid in der ersten Mischung des korrosiven Fluids und des nicht korrosiven Fluids durch Steuern der ersten Menge des nicht korrosiven Fluids und der zweiten Menge des korrosiven Fluids.

11. Verfahren nach Anspruch 10, umfassend das Ausgeben einer zweiten Mischung des nicht korrosiven Fluids und des korrosiven Fluids bei niedrigem Druck von dem zweiten Fluidauslass (58) des rotierenden isobaren Druckaustauschers (12, 40), wobei ein Prozentsatz an korrosivem Fluid in der zweiten Mischung weniger als 5% beträgt.

## Revendications

1. Système, comprenant :
une source de fluide non corrosif (16, 104, 152, 182) ;
une source de fluide corrosif (24, 110, 188) ;
un échangeur de pression isobarique rotatif (12, 40) configuré pour échanger des pressions entre un fluide non corrosif et un fluide corrosif, où l'échangeur de pression isobarique rotatif (12, 40) comprend :
une première entrée (56) configurée pour recevoir une première quantité du fluide non corrosif de la source de fluide non corrosif (16, 104, 152, 182) à une première pression ;
une seconde entrée (60) configurée pour recevoir une seconde quantité du fluide corrosif de la source de fluide corrosif (24, 110, 188) à une deuxième pression, où la première pression est plus élevée que la deuxième pression, et la première quantité est plus grande que la seconde quantité ;
une première sortie (62) configurée pour sortir un premier mélange du fluide corrosif et du fluide non corrosif à une troisième pression ; et
une seconde sortie (58) configurée pour sortir le fluide non corrosif à une quatrième pression, où la troisième pression est plus élevée que la quatrième pression ;
le système comprenant en outre :
un contrôleur (128) configuré pour contrôler la première quantité du fluide non corrosif et la seconde quantité du fluide corrosif pour contrôler un rapport de fluide non corrosif à fluide corrosif dans le premier mélange du fluide corrosif et du fluide non corrosif.

2. Système selon la revendication 1, dans lequel le fluide corrosif comprend du carbamate d'ammonium, de l'urée, de l'acide nitrique, de l'acide sulfurique ou une de leurs combinaisons.

3. Système selon la revendication 1 ou 2, dans lequel la seconde sortie (58) est configurée pour sortir un second mélange du fluide corrosif et du fluide non corrosif à la quatrième pression, et un pourcentage du fluide corrosif dans le second mélange est de moins de 5 %.

4. Système selon la revendication 3, dans lequel le contrôleur (128) est en outre configuré pour contrôler la première quantité du fluide non corrosif et la seconde quantité du fluide corrosif pour contrôler le pourcentage du fluide corrosif dans le second mélange.

5. Système selon l'une quelconque des revendications précédentes, comprenant un réacteur chimique (125) configuré pour recevoir le premier mélange du fluide corrosif et du fluide non corrosif, où le premier mélange augmente une vitesse d'une réaction chimique dans le réacteur chimique.

6. Système selon l'une quelconque des revendications 1 à 4, comprenant un réacteur chimique configuré pour fournir un courant de descente de pression comprenant le fluide non corrosif à la première pression.

7. Système selon l'une quelconque des revendications précédentes, comprenant en outre :
un système industriel, où le système industriel (10, 100, 150, 180) comprend l'échangeur de pression isobarique rotatif (12, 40).

8. Système selon la revendication 7, dans lequel le système industriel (10, 100, 150, 180) comprend :
une pompe ou une vanne configurée pour conduire le fluide non corrosif à la première pression au premier mélange du fluide corrosif et du fluide non corrosif pour créer un troisième mélange (124) du fluide corrosif et du fluide non corrosif ; et
un réacteur chimique (125) configuré pour recevoir le troisième mélange (124) du fluide corrosif et du fluide non corrosif, où le troisième mélange augmente ne vitesse d'une réaction chimique dans le réacteur chimique (125).

9. Système selon la revendication 7 ou 8, dans lequel le système industriel (10, 100, 150, 180) comprend:
un récipient à haute pression (182) configuré pour contenir le fluide non corrosif à haute pression ;
une première pompe (186) configurée pour recevoir le fluide non corrosif du récipient à haute pression (182) et pour conduire la première quantité du fluide non corrosif à la première pression à l'échangeur de pression isobarique rotatif (12, 40) ; et
une pompe à haute pression (194) configurée pour recevoir le fluide non corrosif à la quatrième pression de l'échangeur de pression isobarique rotatif (12, 40), pressuriser le fluide non corrosif, et
conduire le fluide non corrosif pressurisé au récipient à haute pression (182) ;
où l'échangeur de pression isobarique rotatif (12, 40) est configuré pour conduire le premier mélange du fluide non corrosif et du fluide corrosif à la troisième pression au récipient à haute pression (182).

10. Procédé, comprenant :
la réception d'une première quantité d'un fluide non corrosif d'une source de fluide non corrosif (16, 104, 152, 182) à haute pression à une première entrée de fluide (56) d'un échangeur de pression isobarique rotatif (12, 40) ;
la réception d'une seconde quantité d'un fluide corrosif d'une source de fluide corrosif (24, 110, 188) à basse pression à une seconde entrée de fluide (60) de l'échangeur de pression isobarique rotatif (12, 40), où la première quantité est plus grande que la seconde quantité ;
l'échange des pressions entre le fluide non corrosif et le fluide corrosif en utilisant l'échangeur de pression isobarique rotatif (12, 40) ;
la sortie d'un premier mélange du fluide corrosif et du fluide non corrosif à haute pression à partir d'une première sortie de fluide (62) de l'échangeur de pression isobarique rotatif (12, 40) ;
la sortie du fluide non corrosif à basse pression à partir d'une seconde sortie de fluide (58) de l'échangeur de pression isobarique rotatif (12, 40) ; et
le contrôle, en utilisant un contrôleur (128), d'un rapport du fluide non corrosif au fluide corrosif dans le premier mélange du fluide corrosif et du fluide non corrosif en contrôlant la première quantité du fluide non corrosif et la seconde quantité du fluide corrosif.

11. Procédé selon la revendication 10, comprenant la sortie d'un second mélange du fluide non corrosif et du fluide corrosif à basse pression à partir de la seconde sortie de fluide (58) de l'échangeur de pression isobarique rotatif (12, 40), où un pourcentage de fluide corrosif dans le second mélange est de moins de 5 %.
